# EUROPÄISCHE PATENTSCHRIFT

(11) **EP 0 350 476 B1**
(45) Veröffentlichungstag und Bekanntmachung des Hinweises auf die Patenterteilung: **29.12.1993**
(21) Anmeldenummer: 89890179.8
(22) Anmeldetag: 05.07.1989
(51) Int. Cl.: F16H 61/16

(54) **Schaltvorrichtung zur wahlweisen Einschaltung der beiden Übersetzungsstufen eines Verteiler- oder Zwischengetriebes**
Gear change device for selectively switching on one of two ratios of a distribution- or intermediate-gearing
Dispositif de changement de vitesses pour mettre en marche sélectivement l'un de deux rapports de vitesses d'une transmission intermédiaire ou de distribution

(30) Priorität: 08.07.1988 AT 1772/88
(43) Veröffentlichungstag der Anmeldung: 10.01.1990
(73) Patentinhaber: STEYR-DAIMLER-PUCH AKTIENGESELLSCHAFT, 1010 Wien (AT)
(72) Erfinder: Reif, Johann Peter, Dipl.-Ing. Dr. techn., A-5360 St. Wolfgang (AT); Deinhofer, Johann, A-3353 Seitenstetten (AT)

(56) Entgegenhaltungen:
- DE-A- 2 065 856
- DE-A- 2 502 445
- DE-C- 532 386
- FR-A- 777 227
- FR-A- 2 376 973
- GB-A- 1 172 982
- GB-A- 2 019 509
- GB-A- 2 071 794
- US-A- 2 277 198
- US-A- 2 313 359

## Beschreibung

Die Erfindung bezieht sich auf eine Schaltvorrichtung zur wahlweisen Einschaltung der beiden Übersetzungsstufen eines Verteiler- oder Zwischengetriebes über ein Schaltelement, insbesondere zur wahlweisen Einschaltung des Geländeganges bei Schwerlastfahrzeugen, wobei der Motor mit der Antriebswelle des Verteilergetriebes über die Fahrkupplung verbunden ist.

Bisher ist das Schaltelement des Verteiler- oder Zwischengetriebes als Schubklauenmuffe ausgebildet, die einen beträchtlichen Nachteil mit sich bringt. Vor allem ist bei der Anwendung einer Schubklauenmuffe das Schalten bzw. das Einschalten des Geländeganges praktisch nur bei Stillstand des Fahrzeuges möglich. Dabei wird der Geländegang nicht nur beim Übergang von Straßenfahrt zur Geländefahrt eingerückt, sondern es ist dies auch dann erforderlich, wenn mit einem schwer beladenen Lastfahrzeug ein steileres Straßenstück zu überwinden ist. Auf einer Straße ist aber aus verkehrstechnischen Gründen das Anhalten eines Fahrzeuges nur um einen Geländegang einlegen zu können, selbstverständlich unzulässig. Noch größere Probleme treten auf, wenn es sich, beispielsweise im militärischen Bereich, um eine Kolonne gleicher Lastfahrzeuge handelt, bei denen dann nahezu gleichzeitig dieselben Fahrmanöver durchzuführen sind.

Es ist üblich, bei zwei oder mehrstufigen Getrieben das Schaltelement mit einer Synchronisiereinrichtung auszustatten, um eine entsprechende Schalterleichterung zu erreichen. Bisher war man aber der Meinung, daß bei Verteiler- oder Zwischengetrieben von Schwerlastfahrzeugen od.dgl. wegen des großen zu übertragenden Drehmomentes und insbesondere wegen des meist großen Sprunges des Übersetzungsverhältnisses von beispielsweise 1 : 1,7 zwischen den beiden Übersetzungsstufen die auftretenden Schaltkräfte zu groß sind oder zu lange Schaltzeiten in Kauf genommen werden müssen, um ein Schaltelement mit Synchronisiereinrichtung vorsehen zu können. Dabei wurde bedacht, daß beim Synchronisiervorgang alle vorgeordneten Teile des Antriebsstranges, insbesondere des Wechselgetriebes, vorwärts bis zur Fahrkupplung beschleunigt oder verzögert werden müssen.

Der Erfindung liegt daher die Aufgabe zugrunde, die eingangs geschilderte Schaltvorrichtung so zu verbessern, daß das wahlweise Einschalten der beiden Übersetzungsstufen jeweils ohne Anhalten des Fahrzeuges und ohne besondere Anforderungen an die Geschicklichkeit des Fahrers gewährleistet ist.

Die Erfindung löst die gestellte Aufgabe dadurch, daß das Schaltelement als während der Fahrt bei ausgerückter Fahrkupplung über eine Betätigungsvorrichtung verstellbare Muffe mit Synchronisiereinrichtung ausgebildet und eine Rückschaltsperre vorgesehen ist, die, von einem Drehzahlwächter gesteuert, ein Zurückschalten in den Geländegang nur zuläßt, wenn die Motordrehzahl beim Ausrücken der Fahrkupplung in einem vorgebbaren unteren Bereich liegt.

Es hat sich überraschenderweise gezeigt, daß trotz der vorhandenen hohen Massenkräfte die Anordnung einer Muffe mit Synchronisiereinrichtung mit vertretbarem technischen Aufwand möglich ist, um dadurch die gewünschte Schalterleichterung zu erreichen und ein jeweiliges Anhalten des Fahrzeuges vor dem Schaltvorgang zu vermeiden. Allerdings muß dabei darauf geachtet werden, daß beim Rückschaltvorgang in den Geländegang der Motor des Fahrzeuges nicht überdreht wird, weshalb die vom Drehzahlwächter gesteuerte Rückschaltsperre vorgesehen ist, die ein Einrücken des Geländeganges verhindert, wenn die Motordrehzahl ein bestimmtes Höchstmaß überschreitet. Dabei ist die der momentanen Fahrgeschwindigkeit entsprechende tatsächliche Motordrehzahl im Augenblick des Ausrückens der Fahrkupplung maßgeblich. Bei diesem Ausrücken der Fahrkupplung muß nämlich stets mit einem Abfallen der Motordrehzahl gerechnet werden.

Liegt die Motordrehzahl vor dem Schaltvorgang in den Geländegang vor allem bei der Fahrt auf ebener oder abfallender Fahrbahn über dem vorgegebenen Bereich, so könnte sie durch den erwähnten Abfall in diesen Bereich gelangen und das Schalten ermöglichen, was unter Umständen beim nachfolgenden Einrücken der Fahrkupplung erst wieder zu einem Überdrehen des Motors führen könnte. Es muß also die Motordrehzahl bereits beim Ausrücken der Fahrkupplung in dem vorgegebenen unteren Bereich liegen.

Die Rückschaltsperre kann aus einer die Betätigungsvorrichtung in der dem Straßengang entsprechenden Schaltstellung festhaltenden, vom Drehzahlwächter ab einer vorgebbaren Drehzahl einrückbaren Verriegelung bestehen, wobei es sich um eine hydraulische, mechanische oder elektrische Verriegelung handeln kann.

Bei auftretendem hohem Fahrwiderstand sollte der Rückschaltvorgang in den Geländegang möglichst rasch erfolgen, da sonst zu viel Fahrgeschwindigkeit eingebüßt wird und erst wieder ein Stillstand des Fahrzeuges zu befürchten ist. Bei hoher Motorbelastung kann es also zu einem vergleichsweise raschen Abfall der Fahrgeschwindigkeit kommen, weshalb erfindungsgemäß zusätzlich ein Fühler für die momentane Motorbelastung, insbesondere das vom Motor auf die Antriebswelle des Verteiler- oder Zwischengetriebes übertragene Drehmoment, vorgesehen ist, der die Rückschaltsperre im Sinne des Anhebens der Ansprechdrehzahl mit zunehmender Motorbelastung steuert.

Dabei ist es zweckmäßig, wenn der Fühler für die momentane Motorbelastung einen Mengen- oder Druckregler für das Beaufschlagungsmedium des Stelltriebes im Sinne einer Vergrößerung der Schaltgeschwindigkeit durch Erhöhung der Beaufschlagung bei steigender Motorbelastung ansteuert.

Dabei kann der Fühler für die Motorbelastung aus einem Näherungsschalter für einen an der unter dem Rückdrehmoment des Motors ihre Drehlage ändernden Kupplungsglocke der Fahrkupplung angeordneten Steuernocken bestehen, was eine einfache und zweckmäßige Konstruktion ergibt.

Erfindungsgemäß dient für die Betätigung des verstellbaren Schaltelementes ein pneumatischer oder hydraulischer Stelltrieb, der über elektromagnetisch gesteuerte Ventile oder Schieber in den beiden Verstellrichtungen beaufschlagbar ist, wobei die Ventile über eine elektrische Steuereinrichtung betätigbar sind, die einen Vorwählschalter für die jeweilige Schaltstellung sowie mit der Fahrkupplung betätigbare Schalter aufweist, die eine Ansteuerung der Ventile nur bei ausgerückter Fahrkupplung freigeben, wobei der Drehzahlwächter die Steuereinrichtung zusätzlich beim Überschreiten der vorgegebenen Drehzahl gegen eine Betätigung im Sinne des Zurückschaltens in den Geländegang sperrt.

Um notwendigerweise kurze Schaltzeiten zu erreichen, müssen vergleichsweise hohe Schaltkräfte aufgebracht werden. Auch wenn für die Verstellung des Schaltelementes ein hydraulischer Stelltrieb vorgesehen ist, der mit einem Handschalthebel betätigt wird, sind am Handschalthebel noch verhältnismäßig hohe Handkräfte erforderlich, weil der Weg des Armes des Bedienungsmannes aus ergonometrischen Gründen beschränkt ist bzw. nicht beliebig verlängert werden kann. Wenn also für die Betätigung des Schaltelementes ein hydraulischer Stelltrieb mit Handschalthebel dient, so ist dieser erfindungsgemäß durch eine beim Schwenken des Handschalthebels zwischen seinen Endstellungen ihre Totpunktlage überwindende Feder unterstützt. Das Ausrücken aus dem jeweils eingenommenen Getriebegang geht verhältnismäßig leicht vor sich. Für das Einrücken des jeweils anderen Ganges steigt dagegen der Kraftaufwand, weshalb die sich nach Überwinden der Totpunktlage entspannende Feder eine wertvolle Unterstützung bietet. Außerdem sorgt die Feder dafür, daß der Handschalthebel stets eine seiner beiden Endstellungen erreicht. Weitere Einzelheiten und vorteilhafte Ausbildungen des Erfindungsgegenstandes entnimmt man der nachfolgenden Zeichnungsbeschreibung.

In der Zeichnung ist der Erfindungsgegenstand beispielsweise veranschaulicht. Es zeigen
- Fig. 1: ein Prinzipschema eines mit einer erfindungsgemäßen Schaltvorrichtung ausgestatteten Verteilergetriebes,
- Fig. 2: ein Blockschaltschema einer möglichen Ausgestaltung der Steuereinrichtung für die Schaltvorrichtung und
- Fig. 3: eine mögliche andere Ausgestaltung der Schaltvorrichtung im Schema.

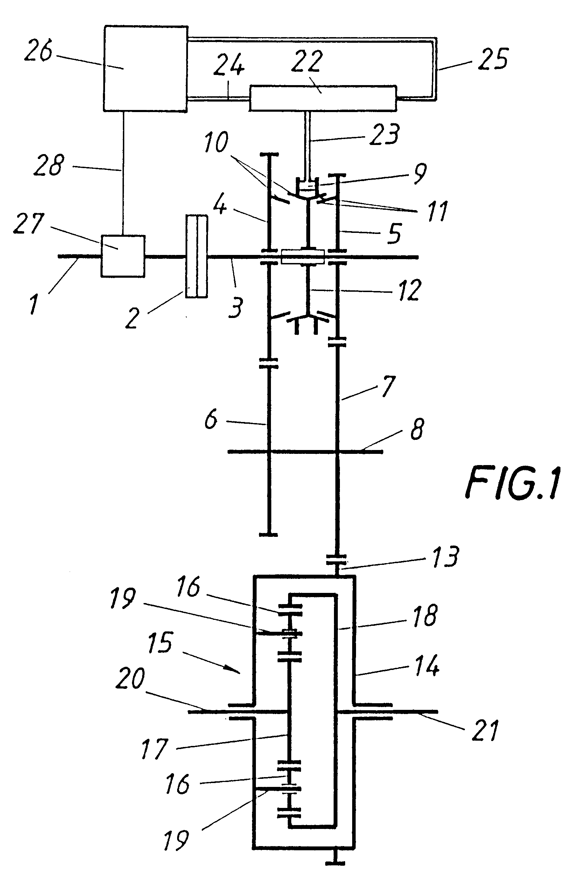

Nach Fig. 1 ist ein auf zwei verschiedene Übersetzungsstufen umschaltbares Verteilergetriebe vorgesehen, das von der Motorwelle 1 über die ein- und ausrückbare Fahrkupplung 2 und ein der besseren Übersichtlichkeit halber nicht dargestelltes schaltbares Wechselgetriebe angetrieben wird. Auf der Eingangswelle 3 sind zwei Zahnräder 4, 5 vorgesehen, die dauernd mit weiteren Zahnrädern 6, 7 auf einer Zwischenwelle 8 kämmen und die über eine Muffe 9 mit Synchronisiereinrichtungen 10, 11 wechselweise mit der Welle 3 kuppelbar sind, so daß bei Kupplung des Zahnrades 4 mit der Welle 3 der Straßengang und bei Kupplung des Zahnrades 5 mit der Welle 3 in meist stark unterschiedlichem Übersetzungsverhältnis der Geländegang eingeschaltet wird. Die Muffe 9 mit den Synchronisiereinrichtungen kann auf einem auf der Welle 3 verschiebbaren, aber mit der Welle 3 auf Drehungsmitnahme gekuppelten Rad 12 angebracht sein. Es handelt sich um eine sogenannte Sperrsynchronisierung, bei der das Rad 12 beim Umschalten zunächst über seine Klauen od.dgl. und entsprechende Gegenklauen der Muffe 9 Synchronisierungsringe mitnimmt und sobald das mitzunehmende Zahnrad 4 oder 5 durch Reibungsschluß der Ringe die Drehzahl der Welle erreicht hat, in Gegenklauen des jeweiligen Zahnrades einrastet, so daß dieses Zahnrad dann starr mit der Welle 3 gekuppelt ist. Entsprechende Einrichtungen sind an und für sich Stand der Technik.

Die beiden Zahnräder 6, 7 sitzen, wie erwähnt, auf der gemeinsamen Welle 8, wobei das Zahnrad 7 über einen Gegenzahnkranz 13 das Gehäuse 14 eines Planeten-Differentialgetriebes 15 antreibt. Das Gehäuse 14 bildet gleichzeitig den Planetenradträger, auf dem Planetenräder 16, die mit einem Sonnenrad 17 und einem Außenzahnkranz 18 kämmen, um Wellen 19 drehbar gelagert sind. Das Sonnenrad 17 bzw. der Außenzahnkranz 18 sind mit zu den beiden Antriebszweigen 20, 21 eines Allradantriebes eines Schwerlastfahrzeuges führenden Wellen 20, 21 verbunden.

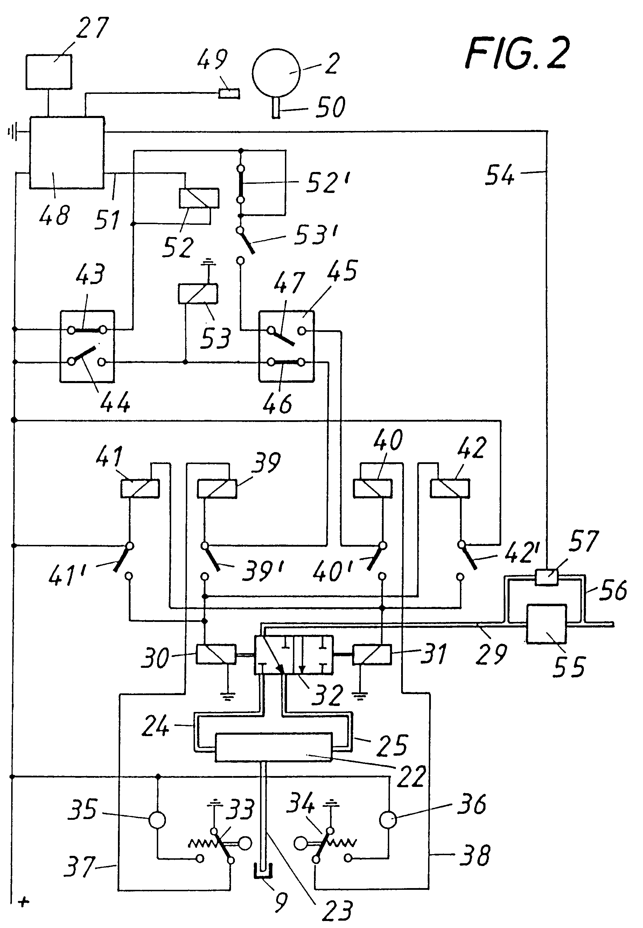

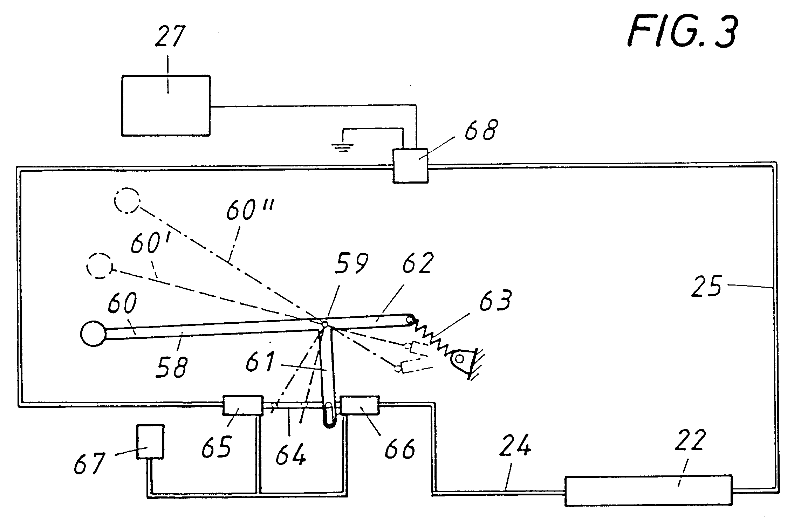

Zur Betätigung der Muffe 9 mit den Synchronisiereinrichtungen 10, 11 ist ein hydraulischer oder pneumatischer Stelltrieb 22 vorgesehen, der einen die Muffe 9 verstellenden Arm 23 aufweist. Der Stelltrieb 22 kann als Zylinder-Kolbeneinheit mit beidseitig beaufschlagbarem Kolben bzw. beidseitig beaufschlagbaren Zylinderräumen ausgebildet sein, wobei es für die Funktion gleichgültig ist, ob der Arm 23 bei feststehendem Zylinder mit einer herausgeführten Kolbenstange verbunden ist oder der Kolben feststeht und der dann mit dem Arm 23 verbundene Zylinder durch die Beaufschlagung nach der einen oder anderen Seite verschoben werden kann. Für die Beaufschlagung in den beiden Verstellrichtungen sind Leitungen 24, 25 vorgesehen, die von einer Steuereinheit 26 gesteuert beaufschlagt werden. In Fig. 1 wurde nur das Arbeitsprinzip dargestellt. Die Steuereinrichtung 26 kann, wie dies im Zusammenhang mit Fig. 2 zu beschreiben sein wird, eine elektrische Steuereinrichtung für eine pneumatische oder hydraulische Beaufschlagung des Stelltriebes oder gemäß Fig. 3 eine mechanisch-hydraulische Betätigungseinrichtung für den Stelltrieb 22 sein. Bei allen Ausführungsformen ist ein die Motordrehzahl bei eingerückter Fahrkupplung 2 erfassender Drehzahlwächter 27 vorgesehen, der ein Zurückschalten in den Geländegang 5 - 7 nur zuläßt, wenn die Motordrehzahl beim Ausrücken der Fahrkupplung 2 in einem vorgebbaren unteren Bereich liegt. In Fig. 1 wurde eine Ausführung angedeutet, bei der die Steuereinheit 26 über eine Leitung 28 mit dem Drehzahlwächter verbunden ist. Es ist aber auch möglich, über den Drehzahlwächter 27 eine beim Überschreiten der vorgebbaren Drehzahl einrückende Sperre für den Arm 23, die damit den Arm in der den Straßengang einkuppelnden Stellung festhält, eine Sperre in den Leitungen 24, 25, eine Sperre für eine Gangvorwählschaltung, wie dies noch im Zusammenhang mit Fig. 2 zu beschreiben sein wird, oder unmittelbar eine Sperre für einen Schalthebel, die diesen Schalthebel in der dem Straßengang entsprechenden Stellung festhält, zu betätigen.

In Fig. 2 ist eine mögliche Ausführungsform eines pneumatischen Stelltriebes mit zugeordneter elektrischer bzw. elektronischer Steuereinrichtung dargestellt. Der Stelltrieb 22 ist von einer Druckluftleitung 29 aus über einen als von Elektromagneten 30, 31 betätigbaren Umsteuerschieber 32 dargestellten Umschalter wahlweise in den beiden Verstellrichtungen beaufschlagbar. Der Einfachheit halber wurde ein von den beiden Elektromagneten 30, 31 wahlweise in den beiden Richtungen verstellbarer, gemeinsamer Schieber 32 dargestellt, der beim Einschalten des Elektromagneten 30 den Straßengang und beim Einschalten des Elektromagneten 31 über den Arm 23 und die Muffe 9 den Geländegang schaltet.

Für den Arm 23 sind zwei federbelastete Anschlagschalter 33, 34 vorgesehen. Der besseren Übersichtlichkeit halber werden in Fig. 2 alle Schalter und Relais im unbetätigten Zustand dargestellt, dabei wird darauf hingewiesen, daß immer einer der beiden Schalter 33, 34 betätigt, also umgeschaltet werden muß, da er mit dem Arm 23 in Eingriff steht und der Arm nur während des Schaltvorganges die dargestellte Zwischenlage einnimmt. Der eben betätigte Schalter 33 oder 34 schaltet über den einen Schaltkontakt eine Anzeigelampe 35, 36 ein, wobei das Aufleuchten der Lampe 35 anzeigt, daß der Straßengang eingeschaltet ist, wogegen die Lampe 36 den eingeschalteten Geländegang anzeigt. Die zweiten Gegenkontakte der Schalter 33, 34 sind über Leitungen 37, 38 mit je einem Schaltrelais 39, 40 zum Einschalten des Straßen- bzw. Geländeganges verbunden, wobei jeweils der nicht betätigte Schalter 33 oder 34 das zugeordnete Relais 39 oder 40 an Masse legt und dadurch schaltbereit macht. Dem Relais 39, 40 sind noch zu beschreibende Halterelais 41, 42 zugeordnet, die dann notwendig sind, wenn die Relais 39, 40 nur kurzzeitig betätigt werden und der Betrieb des Stelltriebes 22 gegen Gegendruck erfolgt.

Der Fahrkupplung oder dem Kupplungspedal sind zwei Schalter 43, 44 zugeordnet, wobei der Schalter 43 bei eingerückter Fahrkupplung, also unbetätigtem Kupplungspedal, und der Schalter 44 bei niedergedrücktem Kupplungspedal (ausgerückter Kupplung) geschlossen und der jeweils andere Schalter 43 bzw. 44 geöffnet ist. Für den Fahrer erreichbar ist eine Wähleinheit 45 vorgesehen, die wieder zwei Schalter 46, 47 aufweist, von denen der eine (46) bei Vorwahl des Straßenganges und der Schalter 47 bei Vorwahl des Geländeganges geschlossen wird. Eine elektrische bzw. elektronische Steuereinheit 48 ist mit dem Drehzahlwächter 27 und einem Näherungsschalter 49 für einen auf der Glocke der Fahrkupplung 2 angeordneten Nocken 50 verbunden. Der Näherungsschalter spricht bei Überschreiten eines vorgebbaren, über die Kupplung übertragenen und durch die Reaktionskräfte eine Verdrehung der Kupplungsglocke bewirkenden Drehmomentes an und ist also ein Wächter für die momentane Motorbelastung.

In Fig. 2 befindet sich der Vorwählschalter 46 in Schließstellung, was bedeutet, daß der Straßengang vorgewählt ist. Wird die Kupplung 2 betätigt, dann öffnet der Schalter 43 und der Schalter 44 schließt. Da der Schalter 43 noch nicht betätigt ist, wird das Relais 39 eingeschaltet und schließt seinen Kontakt 39′. Dadurch wird der Elektromagnet 30 eingeschaltet, verstellt den Schieber 32 in die dargestellte Lage und der Stelltrieb 22 beginnt seine Verstellung im Sinne des Einrückens des Straßenganges über den Arm 23. Das Halterelais 41 zieht seinen Kontakt 41′ an und hält den Magneten 30 auch dann eingeschaltet, wenn der Arm 23 den Schalter 33 umschaltet, so daß die Anzeigelampe 35 eingeschaltet, das Relais 39 aber vom Masseanschluß getrennt wird.

Für die Umschaltung vom Straßengang in den Geländegang wird der Vorwählschalter 47 geschlossen und der Vorwählschalter 46 geöffnet. Zur Verhinderung eines Schaltens bei Überschreiten einer vorgegebenen Drehzahl ist die elektronische Steuereinheit 48 mit dem Drehzahlwächter 27 verbunden. Wenn eine vorgegebene Drehzahl (beispielsweise 1400 U/min) überschritten wird, legt die Steuereinheit 48 einen Masseanschluß auf eine Leitung 51, so daß ein Relais 52 über den noch geschlossenen Kupplungsschalter 43 Strom erhält und seinen Ruhekontakt 42′ öffnet. Wird nun die Fahrkupplung betätigt, so schließt zwar der Schalter 44, der Vorwählschalter 47 erhält aber wegen des geöffneten Kontaktes 42′ keinen Strom und der Schaltvorgang unterbleibt. Das Relais 52 fällt erst ab, wenn nach Schließen des Schalters 43 der Drehzahlwächter 27 einen zulässigen Drehzahlbereich erfaßt. In diesem Fall erhält das Relais 52 keinen Strom. Beim Schließen des Schalters 47 und geschlossenem Schalter 44 zieht ein Relais 53 seinen Kontakt 53′ an, so daß das Relais 40 seinen Kontakt 40, schließt, den Magneten 31 einschaltet und auch das Halterelais 42 seinen Kontakt 42′ schließen kann. Dadurch wird auch das Relais 41 stromlos und es findet die Umsteuerung in den Geländegang statt. Dabei verläßt der Arm 23 den Schalter 33, die Anzeigelampe 35 erlischt, das Relais 39 wird wieder mit Masse verbunden und schließlich schaltet der Schalter 34 um, so daß nun die Lampe 36 leuchtet.

Die elektronische Steuereinheit 48 schaltet dann, wenn der Näherungsschalter 49 angesprochen hat, auf einen höheren zulässigen Drehzahlbereich (beispielsweise auf 1900 U/min) um, d.h. erst beim Erreichen dieses höheren Drehzahlbereiches wird der Masseanschluß auf die Leitung 51 gelegt, so daß nun das Einlegen des Geländeganges bis zur höheren Drehzahl zulässig und möglich ist.

Wie durch eine Schaltleitung 54 angedeutet wurde, kann eine zusätzliche Schalthilfe vorgesehen sein, um bei starker Motorbelastung die Schaltvorgänge zu beschleunigen. Zu diesem Zweck liegt in der Versorgungsleitung 29 eine Drosseleinrichtung 55, die normalerweise den Betriebsdruck in der Leitung 29 herabsetzt und für die eine Überbrückungsleitung 56 mit einem über die Leitung 54 betätigbaren Absperrorgan 57 vorgesehen ist, so daß beim Öffnen des Absperrorganes 57 auf die Leitung 29 der höhere Betriebsdruck gelegt wird und dementsprechend der Stelltrieb 22 und damit die Muffe 9 schneller betätigt werden. Es kann ein Zeitglied vorgesehen sein, welches diese höhere Beaufschlagung zeitlich begrenzt. Ferner ist es möglich, über den Näherungsschalter 49 das Absperrorgan 57 direkt (über das Zeitglied) zu betätigen und die Betätigung über entsprechende Steuereinrichtungen nur dann vorzunehmen, wenn eben ein Schaltvorgang stattfindet, so daß auf jeden Fall die Beaufschlagung des Stelltriebes 22 nach Erreichen der Umschaltstellung wieder über die Drosseleinrichtung 55 erfolgt.

Bei der Ausführung nach Fig. 3 ist für den Stelltrieb 22 ein Handschalthebel 58 vorgesehen, der um eine Achse 59 schwenkbar ist und einen Betätigungsarm 60, einen Arbeitsarm 61 und einen Stützarm 62 aufweist, mit welch letzterem der Hebel 58 an einer Druckfeder 63 abgestützt ist, die eine Übertotpunktsperre bildet und das Bestreben hat, den Schalthebel 60 entweder in der voll dargestellten Lage oder nach Überwinden der Totpunktlage 60′ in der der zweiten Schaltstellung entsprechenden Übertotpunktlage 60˝ zu halten. Nach Überwinden der Totpunktlage unterstützt die Feder 63 den Hebel 58 beim Erreichen der anderen Schaltstellung. Die beiden Schaltstellungen des Hebels 58 müssen nicht genau symmetrisch zur Totpunktlage 60′ angeordnet sein. Man kann die Anordnung so treffen, daß die Feder 63 den an sich schwergängigeren Schaltvorgang stärker unterstützt.

Der Arbeitsarm 61 wirkt auf eine Kolbenstange 64 und über diese auf Arbeitskolben in zwei Geberzylindern 65, 66, die mit einem gemeinsamen Ölvorratsbehälter 67 verbunden sind und die Leitungen 24, 25 beaufschlagen. In einer der beiden Leitungen 24, 25 kann ein vom Drehzahlwächter 27 oder der Steuereinheit 26 betätigbares Absperrorgan 68 vorgesehen sein, das beim Überschreiten der zulässigen Drehzahl schließt und damit ein Zurückschalten in den Geländegang verhindert.

## Patentansprüche

1. Schaltvorrichtung zur wahlweisen Einschaltung der beiden Übersetzungsstufen (4,6 bzw. 5,7) eines Verteiler- oder Zwischengetriebes (15) über ein Schaltelement (9 bis 12), insbesondere zur wahlweisen Einschaltung des Geländeganges bei Schwerlastfahrzeugen, wobei der Motor mit der Antriebswelle des Verteilergetriebes über die Fahrkupplung (2) verbunden ist, dadurch gekennzeichnet, daß das Schaltelement als während der Fahrt bei ausgerückter Fahrkupplung (2) und im Hauptgetriebe eingerücktem Gang über eine Betätigungsvorrichtung (22,23) verstellbare Muffe (9) mit Synchronisiervorrichtung (10,11) ausgebildet und eine Rückschaltsperre (48,52,68) vorgesehen ist, die, von einem Drehzahlwächter (27) gesteuert, ein Zurückschalten in den Geländegang nur zuläßt, wenn die Motordrehzahl beim Ausrücken der Fahrkupplung in einem vorgebbaren unteren Bereich liegt.

2. Schaltvorrichtung nach Anspruch 1, dadurch gekennzeichnet, daß die Rückschaltesperre aus einer die Betätigungsvorrichtung (22,23) in der dem Straßengang entsprechenden Schaltstellung festhaltenden, vom Drehzahlwächter (27) ab einer vorgebbaren Drehzahl einrückbaren Verriegelung (52,68) besteht.

3. Schaltvorrichtung nach Anspruch 1, dadurch gekennzeichnet, daß zusätzlich ein Fühler (49) für die momentane Motorbe-lastung, insbesondere das vom Motor auf die Antriebswelle des Verteiler- oder Zwischengetriebes übertragene Drehmoment, vorgesehen ist, der die Rückschaltsperre (48,52) im Sinne des Anhebens der Ansprechdrehzahl mit zunehmender Motorbelastung steuert.

4. Schaltvorrichtung nach Anspruch 3, dadurch gekennzeichnet, daß der Fühler (49) für die momentane Motorbelastung einen Mengen- oder Druckregler (55,57) für das Beaufschlagungsmedium des Stelltriebes (22) im Sinne einer Vergrößerung der Schalt-geschwindigkeit durch Erhöhung der Beaufschlagung bei steigender Motorbelastung ansteuert.

5. Schaltvorrichtung nach einem der Ansprüche 1 bis 4, dadurch gekennzeichnet, daß für die Betätigung des verstellbaren Schaltelementes (9) ein pneumatischer oder hydraulischer Stelltrieb (22) dient, der über elektromagnetisch gesteuerte Ventile oder Schieber (32) in den beiden Verstellrichtungen beaufschlagbar ist, wobei dei Ventile (32) über eine elektrische Steuereinrichtung betätigbar sind, die einen Vorwählschalter (45) für die jeweilige Schaltstellung sowie mit der Fahrkupplung (2) betätigbare Schalter (43,44) aufweist, die eine Ansteuerung der Ventile (32) nur bei ausgerückter Fahrkupplung freigeben, wobei der Drehzahlwächter (27) die Steuereinrichtung (48) zusätzlich beim Überschreiten der vorgegebenen Drehzahl gegen eine Betätigung im Sinne des Zurückschaltens in den Geländegang sperrt.

6. Schaltvorrichtung nach Anspruch 1 bis 5, dadurch gekennzeichnet, daß für die Betätigung des Schaltelementes (9) ein hydraulischer Stelltrieb (22) mit Handschalthebel (58) dient, der durch eine beim Schwenken des Handschalthebels (58) zwischen seinen Endstellungen (60',60'') ihre Totpunktlage überwindende Feder (63) unterstützt ist.

## Claims

1. Shifting device for engaging either of the two gear stages (4,6;5,7) of a distributor gear or intermediate gear (15) by means of a shifting element (9 through 12), in particular for engaging the cross-country speed with heavy lorries, the engine being linked to the drive shaft of the distributor gear by means of the clutch (2), **caracterized** in that the shifting element is a sleeve (9) with synchronizing means (10,11) adjustable during running by an actuator (22,23), when the clutch is released and a gear is engaged in the main gearbox and in that a downshift-lock (48,52,68) is provided which, guided by an overspeed monitor (27), releases a downshift into the cross-country speed only if engine speed upon release of the clutch is within a predetermined lower range.

2. Shifting device according to claim 1, **caracterized** in that the downshift-lock consists of a locking mechanism (52,68) holding the actuator (22,23) in the shifting position corresponding to the road-speed and engageable by means of the overspeed monitor (27) as from a predetermined speed.

3. Shifting device according to claim 1, **caracterized** in that an additional sensor (49) for the actual engine load, in particular of the torque transmitted from the engine to the drive shaft of the distributor gear, is provided, controlling the downshift-lock (48,52) in the sense of raising the speed of response with increasing load.

4. Shifting device according to claim 3, **caracterized** in that the sensor (49) for the actual engine load controls a flow- or pressure-controller (55,57) for the pressure fluid of the actuator (22) in the sense of an increase of shifting speed with increasing engine load.

5. Shifting device according to any of the claims 1 to 4, **caracterized** in that actuation of the adjustable shifting element (9) is performed by a pneumatic or hydraulic actuator (22), acted upon in both directions by electromagnetic valves or slide valves (32), the valves (32) being acted upon in turn by an electric control device comprising a preselecting switch (45) for the shifting position and switches (43,44) actuated together with the clutch (2), the said switches releasing action on the valves (32) only when the clutch is released, and the overspeed monitor (27) additionally locking the control device (48) against operation in the sense of a downshift into cross-country speed, when the predetermined speed is exceeded.

6. Shifting device according to any of the claims 1 to 5, **caracterized** in that operation of the shifting element (9) is performed by a hydraulic actuator (22) with a manual shift lever(58), assisted by a spring (63) which surmounts the dead center when the lever (58) is swung from one end position (60',60'') to the other.

## Revendications

1. Dispositif de changement pour le changement facultatif des deux rapports (4,6;5,7 respectivement) d'une boite de transfert ou boite intermédiaire (15) à l'aide d'un élément de changement (9 à 12), notamment pour passer dans la vitesse tout-terrain des véhicules lourds, le moteur étant relié à l'arbre d'entrainement de la boite de transfert par l'embrayage de marche (2), caractérisé en ce que l'élément de changement est conçu comme manchon (9) avec dispositif de synchronisation (10,11), ajustable en marche quand l'embrayage de marche (2) est ouvert et une vitesse de la boite à vitesses principale est engagée, par un organe de commande (22,23), et en ce que un arrêt de descente des vitesses (48,52,68) est prévu, lequel, commandé par un avertisseur du nombre de tours (27), ne permet le passage dans la vitesse tout-terrain que quand le nombre de tours du moteur au moment du débrayage est situé dans une gamme inférieure prédéterminée.

2. Dispositif de changement selon la revendication 1, caractérisé en ce que l'arrêt de descente des vitesses est constitué par un verrouillage (52,68) enclencheable par l'avertisseur du nombre de tours (27) à l'atteinte d'un nombre de tours prédéterminé, qui immobilise l'organe de commande (22,23) dans la position correspondante à la vitesse de route.

3. Dispositif de changement selon la revendication 1, caractérisé en ce qu'il est prévu en outre un capteur (49) pour la charge au moteur instantanée, notamment pour le couple transmis du moteur à l'arbre d'entrainement de la boite de transfert ou boite intermédiaire, qui contrôle l'arrêt de descente des vitesses (48,52) dans le sens d'une augmentation du nombre de tours de réponse quand la charge au moteur augmente.

4. Dispositif de changement selon la revendication 3, caractérisé en ce que le capteur (49) pour la charge au moteur instantanée commande un régulateur de débit ou de pression (55,57) pour le fluide de pression de l'organe de commande (22) dans le sens d'une augmentation de la vitesse de passage de vitesses par augmentation de la pression quand la charge au moteur augmente.

5. Dispositif de changement selon l'une des revendications 1 à 4, caractérisé en ce que un organe de commande (22) pneumatique ou hydraulique sert à la commande de l'élément de changement ajustable (9), ledit organe de commande (22) étant opérable dans les deux sens d'ajustement par moyen de valves ou tiroirs (32) à commande electromagnétique, les valves (32) étant commandées par un dispositif de commande électrique, qui comporte un commutateur de préselection (45) pour la position de commande respective et des commutateurs (53,44) opérables ensemble avec l'embrayage (2), lesquels ne débloquent l'opération des valves (32) que quand l'embrayage est ouvert, l'avertisseur du nombre de tours (27) blocquant la commande (48) en outre contre une opération dans le sens d'un passage dans la vitesse tout-terrain quand le nombre de tours prédéterminé est franchi.

6. Dispositif de changement selon l'une des revendications 1 à 5, caractérisé en ce que un organe de commande hydraulique (22) avec levier à main (58) sert à l'opération de l'élément de changement (9), ledit organe surmontant le point mort avec l'assistence d'un ressort (63) quand le levier à main (58) bascule entre ses positions finales (60',60'').
